# EUROPÄISCHE PATENTSCHRIFT

(11) **EP 2 431 514 B1**
(45) Veröffentlichungstag und Bekanntmachung des Hinweises auf die Patenterteilung: **11.12.2013**
(21) Anmeldenummer: 11007601.5
(22) Anmeldetag: 19.09.2011
(51) Int. Cl.: D05C 15/12, D05C 17/02, B60R 13/08

(54) **Schichtverbund zur schallreduzierenden Auskleidung eines Kraftfahrzeugbereichs und Verfahren zu dessen Herstellung**
Coating compound for noise attenuating lining of a motor vehicle section and method for producing same
Composite en couche pour l'habillage insonorisé d'une zone de véhicule automobile et son procédé de fabrication

(30) Priorität: 17.09.2010 AT 15552010
(43) Veröffentlichungstag der Anmeldung: 21.03.2012
(73) Patentinhaber: Intier Automotive Eybl GmbH (Ebergassing) & Co. OHG, 2435 Ebergassing (AT)
(72) Erfinder: Ecker, Walter, 2620 Loipersbach (AT); Walter, Peter, 2700 Wiener Neustadt (AT); Mitrowitz, Manfred, 7083 Purbach (AT); Sahin, Naki, 1100 Wien (AT)
(74) Vertreter: Völger, Silke Beatrix

(56) Entgegenhaltungen:
- WO-A1-84/03111
- WO-A1-03/069031
- DE-A1- 4 132 024
- DE-C1- 10 225 072
- DE-U1- 8 535 667
- DE-U1- 9 416 104
- US-A- 5 208 106
- US-A- 5 322 736
- US-A- 5 486 417
- US-A1- 2005 266 241

## Beschreibung

Die Erfindung betrifft einen Schichtverbund zur schallreduzierenden Auskleidung eines Kraftfahrzeugbereichs mit einer Schnittpolteppichschicht und ein Verfahren zu dessen Herstellung.

Um in Kraftfahrzeugen für die Insassen einen hohen Geräuschkomfort zu erzielen, ist der Einsatz von schallreduzierenden Verkleidungen bekannt. Derartige Schall reduzierenden Verkleidungen werden insbesondere an der Innenseite einer einen Motorraum von einem Fahrgastraum trennenden Stirnwand angeordnet. Schallschutz-Abschirmungen können allerdings auch für den Boden-, oder Karosseriebereich von Kraftfahrzeugen eingesetzt werden.

Das amtliche Dokument DE 41 32 024 C2 zeigt einen typischen Schichtverbund zur Auskleidung eines Kraftfahrzeugbereichs. Dieser Schichtverbund umfasst eine sichtseitige Teppichschicht und insbesondere eine Schnittpolteppichschicht. Diese Teppichschicht dient einerseits dazu, dem Fahrzeuginnenraum ein ansprechendes Erscheinungsbild und eine angenehme Anmutung zu verleihen. Daneben erfüllt die Teppichschicht allerdings auch ganz wesentliche Funktionen bei der Absorption und Dämmung von Geräuschen und Lärm. Der Flor der Teppichschicht beseitigt in Verbindung mit darunter angeordneten weiteren Schichten erheblich die hochfrequenten Anteile des Innenraumschalls.

Derartige Schnittpolteppiche werden in einem dem Fachmann bekannten Tuftingverfahren hergestellt. Hierbei werden in ein textiles Trägermaterial mit Hilfe einer Vielzahl von nebeneinander angeordneten Tuftingnadeln sogenannte Polfäden eingenadelt. Die Tuftingnadeln sind dabei jeweils auf einer durchgehenden Linie auf einer Nadelbarre angeordnet.

Aus dem amtlichen Dokument DE 26 59 139 A1 ist ein Tuftingverfahren zum Herstellen eines Schnittpolteppichs bekannt, das eine feste Einbindung des Polgarns ohne Schaumrücken, Kaschier- oder Klebematerialien bewerkstelligt. Dazu sieht dieses Verfahren einen typisch als Thermobonding bezeichneten Verfahrensschritt vor. In diesem Thermobonding wird durch angemessene Erwärmung von der Trägerrückseite das Material der Polgarnfasern aufgeschmolzen und an den Träger angepresst. Falls die Erwärmung ausreichend groß ist, um auch das Trägermaterial aufzuschmelzen, resultiert eine besonders gute stoffschlüssige Verbindung. Andernfalls beruht die Verbindung auf einer mechanischen Verbindung aufgrund des Eintritts des geschmolzenen oder schmelzweichen Fasermaterials in Zwischenräume und Rauhigkeiten des Trägers.

Der bekannte Thermobonding Prozessschritt lässt sich mit den fachgebräuchlichen Maßnahmen und Anpassungen sicher führen, solange Polgarne und Träger mit geringer Toleranz spezifizierte Faserstärken, Materialzusammensetzungen und Schmelztemperaturbereiche aufweisen. Werden die genannten Voraussetzungen nicht erfüllt, kann mit den gebräuchlichen Maßnahmen eine Prozessführung zu einem kontinuierlich einwandfreien Produkt nicht erreicht werden. Als typischer Fehler treten locker Polfäden oder ein Durchschmelzen des Trägers an der Rückseite auf.

Aus dem amtlichen Dokument US 5,494,628 A ist zudem ein sog. Recyling Verfahren zur Verwertung von Abfallmaterial bei der Herstellung von Teppichen bekannt. Allerdings beschränkt sich die Verwertung des Abfallmaterials auf einen unsichtbaren Bereich im Teppichunterbau. Die Wiederverwertungs- oder Recyclingquote dieses Verfahrens ist damit stark beschränkt. Ein nahezu umfassender Einsatz von Abfallmaterial kann mit diesem Verfahren nicht erzielt werden.

Die amtlichen Dokumente US 3,493,459, US 4,492,731 und US 4,091,065 offenbaren verschiedene Fasern für die Teppichherstellung und Verfahren zu deren Herstellung.

Insgesamt versucht man bei der Herstellung von Fahrzeuginnenverkleidungsteilen optisch ansprechende Oberflächenstrukturen zu erzielen, wobei ein möglichst geringen Materialeinsatz und somit ein leichter Schichtverbund hergestellt werden soll. Des Weitern soll das Fahrzeuginnenverkleidungsteil eine hohe Lebensdauer aufweisen.

Vor dem geschilderten Hintergrund stellt sich die Erfindung unter einem ersten Aspekt die Aufgabe, ein besonders leichten und Ressourcen schonend herstellbaren Schichtverbund zur akustisch wirksamen Auskleidung eines Kraftfahrzeugbereichs bereit zu stellen, Dabei soll eine ansprechende Oberflächenoptik erzielt werden. Unter einem zweiten Aspekt stellt sich die vorliegende Erfindung die Aufgabe, ein Verfahren zum Herstellen eines Schichtverbunds zur Auskleidung eines Kraftfahrzeugbereichs mit einem Thermobonding Verfahrensschritt anzugeben, das auf die prozesssichere Verarbeitung von inhomogen oder mit weiten Toleranzen spezifizierten Material ermöglicht. Dies ist insofern besonders interessant, als mit den aus einer Aufbereitung von Altmaterialien oder Abfällen gewonnenen sog. Recyclaten zunehmend sehr preisgünstige Ausgangsstoffe mit vorteilhafter CO₂ Bilanz zur Verfügung stehen, die allerdings in vielen Fällen hinsichtlich ihrer für die Verarbeitung wesentlichen Eigenschaften keinen engen Toleranzen genügen.

Unter beiden Aspekten wird die erfindungsgemäße Aufgabe durch die Verwendung einer Faser mit einem abschnittsweise konkav konturierten Querschnitt, Hohlfasern, oder Hohlfasern mit konkav konturierten Querschnitt, oder einer Fasermischung mit Fasern mit einem abschnittsweise konkav konturierten Querschnitt, Hohlfasern oder Hohlfasern mit konkav konturierten Querschnitt in einer Schnittpolteppichschicht eines Schichtverbunds zur akustisch wirksamen Auskleidung eines Kraftfahrzeugbereichs erreicht. Des Weiteren werden eine ansprechende Oberflächenoptik und eine Gewichtsreduzierung der Schnittpolteppichschicht durch die versetzte Anordnung der Tuftingnadeln beim Tuftingverfahren erzielt. Der Einsatz der zuvor genannten Fasern und die versetzte Anordnung der Tuftingnadeln erzielt bei dem hergestellten Schichtverbund eine besonders ansprechende Oberflächenoptik, wobei insgesamt durch eine biometrisch bessere Anordnung der in Schlaufen verlaufenden Polfäden weniger Garn und somit eine deutliche Gewichtsreduzierung erreicht wird. Die biometrisch bessere Anordnung resultiert darin, dass die Tuffingnadeln versetzt angeordnet sind und so Hohlräume in dem Trägermaterial ausgefüllt werden. Bei den bekannten Tuftingverfahren und entsprechenden Tuftingmaschinen mit auf einer Nadelbarre in einer Geraden angeordneten Tuftingnadeln werden die Hohlräume hingegen nicht optimal besetzt. Insgesamt ist die Oberflächenbeschaffenheit des erfindungsgemäß hergestellten Schichtverbunds mit Schnittpolteppichschicht sehr robust und neigt zu weniger Aufzeilungen.

Unter dem ersten Aspekt wird die erfindungsgemäße Lösung verwirklicht durch ein Produkt mit den Merkmalen nach dem Anspruch 1. Unter dem zweiten Aspekt wird die erfindungsgemäße Aufgabe gelöst durch ein Herstellverfahren mit den Merkmalen nach dem Anspruch 4.

Das erfindungsgemäße Verfahren bietet den Vorteil einer erhöhten Prozesssicherheit im sog. Thermobonding Verfahrensschritt beim Einsatz von ungenau oder inhomogen spezifizierten Materialien. Das Verfahrensprodukt bietet eine nahezu unbeeinträchtige akustische Wirksamkeit für den vorgesehenen Einsatz bei deutlich vermindertem Materialeinsatz. Damit kann das erfindungsgemäße Produkt insbesondere den aktuellen Anforderungen an ein niedriges Gewicht und eine verbesserte CO₂ Bilanz genügen.

Weitere vorteilhafte Ausgestaltungen und Weiterbildungen des erfindungsgemäßen Verfahrens sind in den Unteransprüchen angegeben.

Eine bevorzugte Ausführungsform eines textilen Schichtverbunds zur Innenverkleidung eines Fahrzeugs gemäß der vorliegenden Erfindung wird nachfolgend beispielhalber beschrieben, wobei veranschaulichend auf die beigefügten Zeichnungen Bezug genommen wird. Darin zeigen:
- Fig. 1: einen schematische Darstellung eines erfindungsgemäßen Schichtverbunds mit einer Schnittpolteppichschicht,
- Fig. 2: einen Querschnitt durch eine Faser des Polfadens in der Schnittpolteppichschicht gemäß Fig. 1,
- Fig. 3: eine Ansicht der versetzt angeordneten Tuftingnadeln; und
- Fig. 4: in einer schematischen Darstellung die Nadelanordnung in einer Nadelbarre.

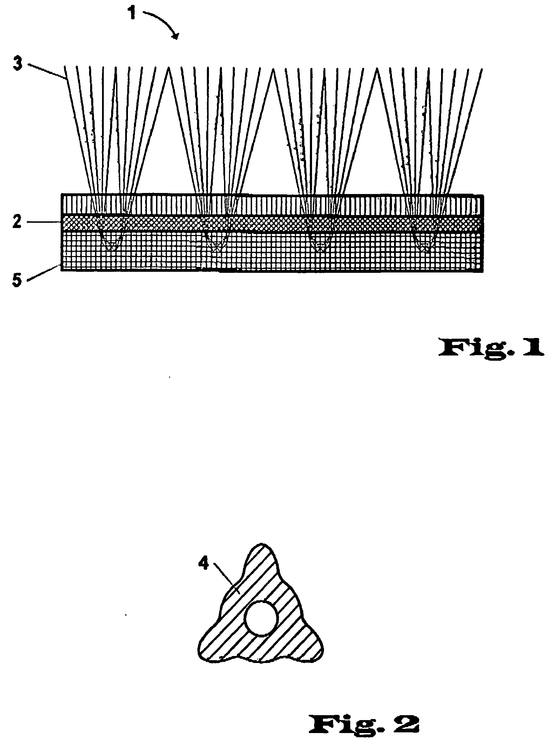

Eine bevorzugte Ausführungsform des erfindungsgemäßen Schichtverbunds zur akustisch wirksamen Auskleidung eines Krattfahrzeugbereichs eine Schnittpolteppichschicht 1 gemäß Fig. 1. Diese Schnittpolteppichschicht 1 ist in der an sich bekannten Art auf einem vorzugweise textilen Träger 2 aufgebaut. In den textilen Träger 2 sind Polfäden 3 als einseitig offene Schlaufen eingesetzt. Auf der Trägerrückseite sind die Polfäden 3 mit dem textilen Träger 2 verbunden, um ein Herauslösen zu verhindern. Auf diese Verbindung wird bei der Beschreibung des Herstellungsverfahrens in weiteren Einzelheiten einzugehen sein.

Die Polfäden 3 sind Garne aus Fasern 4 mit einem besonderen Querschnitt und vorzugsweise Garne aus Hohlfasern 4 mit dem in Fig. 2 dargestellten Querschnitt ausgeführt. Dadurch hat die Faser 4 ein geringes Gewicht pro Standardlänge und weist dennoch gleichzeitig eine gute strukturelle Steifigkeit und eine große Oberfläche auf. Die letztgenannten Eigenschaften dürften dafür bestimmend sein, dass die Verwendung der beschriebenen Faser 4 eine Gewichts- und Materialersparnis ohne Verlust der akustischen Wirksamkeit mit sich bringt.

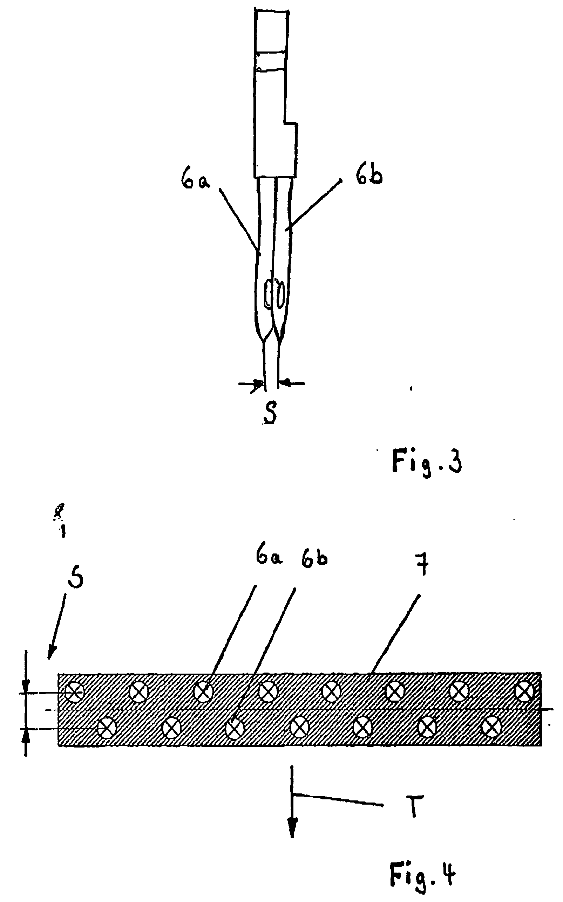

Die vorangehend beschriebene Schnittpolteppichschicht 1 kann in mit den bekannten Verfahren und Anlagen hergestellt werden. Dabei werden zunächst in einem bekannten sog. Tufting Verfahren die Polfäden 3 in den textilen Träger 2 eingesetzt. Hierfür wird zunächst der textile Träger der Tuftingmaschine vorzugsweise mit gleichmäßiger Vorschubgeschwindigkeit zugeführt. Die Polgarndichte und Polgarnmenge kann durch den Abstand der Polgarnschlaufen oder -noppen eingestellt werden, die in Quer - und/oder Längsrichtung des textilen Trägers 2 eingestochen werden. Die Längsrichtung, die gleichfalls der Tuftrichtung entspricht ist in der Figur 4 mit dem Pfeil T bezeichnet.

Das Polgam wird bei dem Tuftingverfahren der entsprechenden Maschine über Garnwalzen zugeleitet. Dabei ist jedem Polfaden eine Tuftingnadel 6a, 6b zugeordnet. Die Tuftingnadeln 6a, 6b sind dabei in einer Nadelbarre 7 angeordnet, die in einer schematischen Darstellung in Figur 4 gezeigt ist. Aus der Darstellung der Figur 4 lässt sich deutlich die versetzte Anordnung der Tuftingnadeln erkennen.

Der Versatz S der benachbart angeordneten Tuftingnadeln in Tuftrichtung T beträgt hierbei 0,1 mm bis 1,5 mm. Aufgrund der versetzt angeordneten Tuftingnadeln 6a, 6b, sind auch die im Schnittpolteppich erzeugten Polfäden versetzt zueinander angeordnet. Die Polschlingen bzw. Poläden liegen hierdurch in jeder Stichreihe in Längsrichtung (Tuftrichtung) T auf einer Geraden, nicht jedoch in Querrichtung.

Nach dem zuvor beschriebenen Tufting kann zur Fixierung der Polfäden 3 in dem textilen Träger 2 wie in Fig. 1 veranschaulicht eine rückseitige Kaschierung 5 wie bspw. ein Schaumrücken oder eine laminierte Flieslage auf den Träger aufgebracht werden. Vielfach wird dies wegen der erforderlichen sortenfremden Zusatzmaterialien allerdings unerwünscht sein. Dann bietet sich das sog. Thermobonding an, das ohne zusätzliche Materialien auskommt. In der bevorzugten Ausführungsvariante des Thermobonding wird die Verbindung von Polfäden und Träger durch ein oberflächliches Verschmelzen hergestellt. Dazu wird die Rückseite des Trägers in bekannter Weise durch eine Flamme oder eine heiße Walze kurzfristig aufgeheizt. Die beschriebenen besonderen Querschnitte der Fasern der Polfäden tragen dabei wesentlich zur Erhöhung der Prozesssicherheit bei.

Der durch das erfindungsgemäße Verfahren hergestellte Schichtverbund wird vorzugsweise zur schallreduzierenden Auskleidung eines Kraftfahrzeugbereichs, insbesondere als daraus gefertigten Bauteile, wie Bodenverkleidungen oder Teile für die Kofferraumausstattung eingesetzt.

## Patentansprüche

1. Schichtverbund zur schallreduzierenden Auskleidung eines Kraftfahrzeugbereichs, aufweisend eine durch ein Tuftingverfahren mit in einer Reihe angeordneter Tuftingnadeln herstellbare Schnittpolteppichschicht (1) mit einem textilen Träger (2) und dadurch in Schlaufen verlaufenden Polfäden (3), **dadurch gekennzeichnet, dass** die Fasern (4) der Polfäden (3) im Wesentlichen aus Polyamid 6 oder aus Polyamid 6,6 Recyclat bestehen, und dass die Polfäden (3) der Schnittpolteppichschicht (4) über-wiegend aus Fasern bestehen, die Fasern mit einem abschnittsweise konkav konturierten Querschnitt, Hohlfasern, oder Hohlfasern mit konkav konturierten Querschnitt, oder einer Fasermischung mit Fasern mit einem abschnittsweise konkav konturierten Querschnitt, Hohlfasern und Hohlfasern mit konkav konturierten Querschnitt sind, und wobei die im Schnittpolteppich erzeugten Polfäden versetzt zueinander angeordnet sind.

2. Schichtverbund nach dem vorangehenden Anspruch, wobei die Fasern (4) der Polfäden (3) überwiegend Hohlfasern mit einem abschnittsweise konkav konturierten Querschnitt und vorzugsweise Hohlfasern mit einem polygonalen, multilobalen oder trilobalen Querschnitt sind.

3. Schichtverbund nach einem der vorangehenden Ansprüche, wobei der Träger (2) im Wesentlichen aus einem PET Recyclat besteht.

4. Verfahren zum Herstellen eines Schichtverbunds zur Auskleidung eines Kraftfahrzeugbereichs aus einem Grundmaterial mit inhomogenen Eigenschaften und insbesondere eines Recyclats, wobei zunächst eine Schnittpolteppichschicht (1) in einem sogenannten Tuftingverfahren bereitgestellt wird, wobei das Tuftingverfahren Schritte zum Einnadeln von Polfäden (3) in Schlaufenform in einen vorzugsweise textilen Träger (2) mittels in einer Reihe angeordneter Tuftingnadein (6a, 6b) umfasst und anschließend die eingenadelten Polfäden (3) durch Erwärmung mit dem Trägermaterial stoffschlüssig verbunden werden, dadurch gekenntzeichnet, dass als Material für die Fasern (4) der Polfäden (3) ein Polyamid 6 oder Polyamid 6,6 Recyclat verwendet wird, und dass für die Polfäden (3) überwiegend Fasern (4) verwendet werden, die ausgewählt sind aus Fasern mit einem abschnittsweise konkav konturierten Querschnitt, Hohlfasern, oder Hohlfasem mit konkav konturierten-Querschnitt, oder einer Fasermischung mit Fasern mit einem abschnittsweise konkav konturierten Querschnitt, Hohlfasern und Hohlfasern mit konkav konturierten Querschnitt, und dass weiterhin die Tuftingnadeln (6a, 6b) in Tuftingrichtung zumindest abschnittsweise um den Versatz (S) versetzt zueinander angeordnet sind.

5. Verfahren nach Anspruch 4, wobei die Fasern (4) der Polfäden (3) überwiegend Hohlfasern mit einem abschnittsweise konkav konturierten Querschnitt und vorzugsweise Hohlfasern mit einem polygonalen, multilobalen oder trilobalen Querschnitt sind.

6. Verfahren nach einem der Ansprüche 4 oder 5, wobei als Material für den Träger (2) ein PET Recyclat verwendet wird.

7. Verfahren nach einem der vorangehenden Ansprüche 4 bis 6, wobei die Tuftingnadein in Quer- und Längsrichtung gleichmäßig alternierend versetzt angeordnet sind.

8. Schallreduierende Auskleidung eines Kraftfahrzeugbereichs, insbesondere ein Bodenverkleidungselement oder ein Kofferraumverkleidungselement herstellbar aus einem Schichtverbund nach einem der vorangehenden Ansprüche 1 bis 3.

## Claims

1. Coating compound for noise attenuating lining of a motor vehicle section, having a cut-pile carpet layer (1), which is manufacturable by a tufting method with tufting needles arranged in one row, having a textile carrier (2) and pile threads (3), which run in the form of loops through said textile carrier (2), **characterized in that** the fibres (4) of the pile threads (3) substantially consist of recycled polyamide 6 or of polyamide 6.6, and **in that** the pile threads (3) of the cut-pile carpet layer (1) mainly consist of fibres which are fibres having in portions a concavely contoured cross section, hollow fibres, or hollow fibres with a concavely contoured cross section, or a fibre mixture with fibres having in portions a concavely contoured cross section, hollow fibres and hollow fibres with a concavely contoured cross section, and wherein the pile threads created in the cut-pile carpet are arranged offset in relation to one another.

2. Coating compound according to the preceding claim, wherein the fibres (4) of the pile threads (3) are mainly hollow fibres having in portions a concavely contoured cross section, and preferably hollow fibres having a polygonal, multilobal or trilobal cross section.

3. Coating compound according to one of the preceding claims, wherein the carrier (2) substantially consists of recycled PET.

4. Method for producing a coating compound for noise attenuating lining of a motor vehicle section, made from a base material having inhomogeneous properties and in particular from a recycled material, wherein initially a cut-pile carpet layer (1) is provided by a so-called tufting method, wherein the tufting method comprises steps for the needling of pile threads (3) in the form of loops into a preferably textile carrier (2) by means of tufting needles (6a, 6b) arranged in one row, and subsequently the needled pile threads (3) are cohesively connected to the carrier material by heating, **characterized in that** a recycled polyamide 6 or polyamide 6.6 is used as the material for the fibres (4) of the pile threads (3), and **in that** mainly fibres (4) which have been selected from fibres having in portions a concavely contoured cross section, hollow fibres, or hollow fibres with a concavely contoured cross section, or a fibre mixture with fibres having in portions a concavely contoured cross section, hollow fibres, and hollow fibres having a concavely contoured cross section are used for the pile threads (3), and furthermore **in that** the tufting needles (6a, 6b) are at least in portions arranged offset in relation to one another in the tufting direction by the offset (S).

5. Method according to Claim 4, wherein the fibres (4) of the pile threads (3) are mainly hollow fibres having in portions a concavely contoured cross section and preferably hollow fibres having a polygonal, multilobal or trilobal cross section.

6. Method according to either of Claims 4 and 5, wherein recycled PET is used as the material for the carrier (2).

7. Method according to one of the preceding Claims 4 to 6, wherein the tufting needles are arranged uniformly offset in an alternating manner in the transverse direction and longitudinal direction.

8. Noise-attenuating lining of a motor-vehicle section, in particular a floor-lining element or a luggage-compartment lining element, manufacturable from a coating compound according to one of the preceding Claims 1 to 3.

## Revendications

1. Composite en couche pour l'habillage insonorisé d'une zone de véhicule automobile, comportant une couche (1) de tapis en velours coupé pouvant être produite à l'aide d'un procédé de tuftage, avec des aiguilles à tufter placées sur une rangée, avec un support (2) textile et des fils (3) s'étendant en boucles à travers ce dernier, **caractérisé en ce que** les fibres (4) des fils (3) sont essentiellement constituées de produit de recyclage de polyamide 6 ou de polyamide 6,6 et **en ce que** les fils (3) de la couche (1) de tapis en velours coupé sont en majeure partie constitués de fibres, qui sont des fibres avec une section transversale à configuration partiellement concave, des fibres creuses ou des fibres creuses avec une section transversale à configuration concave ou un mélange de fibres avec des fibres avec une section transversale à configuration partiellement concave, des fibres creuses et des fibres creuses avec une section transversale à configuration concave, et les fils créés dans le tapis en velours coupé sont disposés en étant déportés les uns par rapport aux autres.

2. Composite en couche selon la revendication précédente, les fibres (4) des fils (3) étant en majeure partie des fibres creuses avec une section transversale à configuration partiellement concave et de préférence des fibres creuses avec une section transversale polygonale, multilobaire ou trilobaire.

3. Composite en couche selon l'une quelconque des revendications précédentes, le support (2) étant constitué essentiellement d'un produit de recyclage de PET.

4. Procédé de fabrication d'un composite en couche pour l'habillage insonorisé d'une zone de véhicule automobile en une matière de base à propriétés non homogènes et notamment d'un produit de recyclage, lors duquel on met d'abord à disposition une couche (1) de tapis en velours coupé par un dénommé procédé de tuftage, le procédé de tuftage comportant des étapes pour l'enfilage de fils (3) en forme de boucles dans un support (2) de préférence textile à l'aide d'aiguilles à tufter (6a, 6b) placées sur une rangée et on relie ensuite par matière les fils (3) enfilés avec la matière de support par échauffement, **caractérisé en ce qu'**en tant que matière pour les fibres (4) des fils (3), on utilise un produit de recyclage de polyamide 6 ou de polyamide 6,6 et **en ce que** pour les fils (3), on utilise en majeure partie des fibres qui sont choisies parmi les fibres avec une section transversale à configuration partiellement concave, les fibres creuses ou les fibres creuses avec une section transversale à configuration concave ou un mélange de fibres avec des fibres avec une section transversale à configuration partiellement concave, des fibres creuses et des fibres creuses avec une section transversale à configuration concave, et **en ce que** par ailleurs, dans la direction de tuftage, les aiguilles à tufter (6a, 6b) sont placées au moins en partie en étant déportées de la valeur du déport (S) les unes par rapport aux autres.

5. Procédé selon la revendication 4, les fibres (4) des fils (3) étant en majeure partie des fibres creuses avec une section transversale à configuration partiellement concave et de préférence des fibres creuses avec une section transversale polygonale, multilobaire ou trilobaire.

6. Procédé selon l'une quelconque des revendications 4 ou 5, lors duquel on utilise en tant que matière pour le support (2) un produit de recyclage de PET.

7. Procédé selon l'une quelconque des revendications précédentes 4 à 6, les aiguilles à tufter étant placées en étant régulièrement déportées en alternance en direction transversale et longitudinale.

8. Habillage insonorisant pour une zone de véhicule automobile, notamment un élément d'habillage de sol ou un élément d'habillage de coffre pouvant être fabriqué en un composite en couche selon l'une quelconque des revendications précédentes 1 à 3.
